# EUROPEAN PATENT APPLICATION

(11) **EP 4 653 823 A1**
(43) Date of publication of application: **26.11.2025**
(21) Application number: 25153676.9
(22) Date of filing: 23.01.2025
(51) Int. Cl.: G01F 1/115, G01F 15/14

(54) **FLOW SENSOR**

(30) Priority: 22.05.2024 CN 202421131525 U
(71) Applicant: ZhongShan QingYi Metal Products Enterprise Co., Ltd., ZhongShan City, Guangdong (CN)
(72) Inventor: Wang, Jizhong, ZhongShan City, Guangdong Province (CN); Li, Shulong, ZhongShan City, Guangdong Province (CN); Wu, Kunguang, ZhongShan City, Guangdong Province (CN); Yu, Tang Chieh, Taichung City (TW)
(74) Representative: Cabinet Chaillot

(57) **Abstract**

A flow sensor has a housing (1) through which water flow passes. A fixing seat (2) and a holder (3) are provided in the housing (1). A central rotating shaft (4) is connected between the fixing seat and the holder. An impeller (5) is mounted on the central rotating shaft (4). The impeller includes a plurality of blades (51). At least one of the blades has a magnet mounting groove (52) that is integrally formed with an outer side of the blade. A magnet (6) is detachably connected in the magnet mounting groove. A Hall sensor (7) is mounted on an outer wall of the housing and corresponds in position to the magnet. The flow sensor has the advantages of higher sensitivity and accuracy.

## Description

### FIELD OF THE INVENTION

The present invention relates to a flow sensor, and more particularly, to a flow sensor with higher sensitivity and accuracy.

### BACKGROUND OF THE INVENTION

In general, a conventional flow sensor uses a mechanical structure consisting of an impeller and a magnet groove to detect the flow of a fluid. In this design, the impeller is placed in the fluid path and rotated by the flowing fluid. The magnet groove is generally disposed on or near the impeller and includes one or more magnets used to generate a magnetic field that changes with the rotation of the impeller. By detecting changes in these magnetic fields, the flow sensor converts them into flow data.

However, there are some significant shortcomings in this structural design. First of all, since the impeller and the magnet groove form two separate parts, they need to be connected by a spindle. This design increases the complexity of manufacturing and assembly. In actual use, assembly gaps, looseness and misalignment between the two parts often occur. These problems result in that the rotations of the impeller and the magnets cannot be synchronized with each other, thus affecting the overall performance of the flow sensor.

Specifically, due to the reduced rotational synchronization of the impeller and the magnets, it becomes more difficult to capture the pulse signals generated by the flow of the fluid, especially under low flow conditions. This directly affects the sensitivity of the flow sensor to detect flow, making it difficult to accurately capture small changes in flow. In addition, the accuracy of flow data is negatively affected by mismatches and misalignments between parts. These problems not only reduce the performance of the flow sensor greatly but also lead to incorrect recording of flow data, which in turn affects the normal operation of the entire system.

Accordingly, the inventor of the present invention has devoted himself based on his many years of practical experiences to solve these problems.

### SUMMARY OF THE INVENTION

In view of the deficiencies of the prior art, the primary object of the present invention is to provide a flow sensor with higher sensitivity and accuracy.

In order to solve the above technical problems, the present invention provides a flow sensor, comprising a housing through which water flow passes. A fixing seat and a holder are provided in the housing. A central rotating shaft is rotatably connected between the fixing seat and the holder. An impeller is secured and mounted on the central rotating shaft. The impeller includes a plurality of blades. At least one of the blades has a magnet mounting groove that is integrally formed with an outer side of the blade. A magnet is detachably connected in the magnet mounting groove. A Hall sensor is mounted on an outer wall of the housing and corresponds in position to the magnet.

Preferably, the magnet is in interference fit with the corresponding magnet mounting groove.

Preferably, the magnet mounting groove is plural. The magnet mounting grooves are evenly distributed in the corresponding blades around an axis of the impeller.

Preferably, the fixing seat and the holder are detachably mounted in the housing. The holder and the fixing seat are detachably connected to each other.

Preferably, the housing consists of an upper housing and a lower housing. A positioning step is disposed inside the lower housing. The fixing seat is inserted into the lower housing in a top-down direction to abut against the positioning step. The upper housing is detachably connected to the lower housing. A lower end of the upper housing presses down against the fixing seat.

Preferably, the lower end of the upper housing is inserted into an opening of an upper end of the lower housing. The upper housing and the lower housing are tightly connected through a U-shaped pin and a sealing ring.

Preferably, an inner wall of the lower housing has positing grooves for insertion and positioning of the holder.

Preferably, a baffle plate is provided on the fixing seat. The baffle plate has a plurality of water distribution holes that are evenly distributed and correspond in position to the respective blades.

### BRIEF DESCRIPTION OF THE DRAWINGS

FIG. 1 is a perspective view of the present invention;
FIG. 2 is a cross-sectional view of the present invention;
FIG. 3 is an exploded view of a fixing seat, a holder and an impeller of the present invention; and
FIG. 4 is a perspective view of a lower housing of the present invention.

### DETAILED DESCRIPTION OF THE PREFERRED EMBODIMENTS

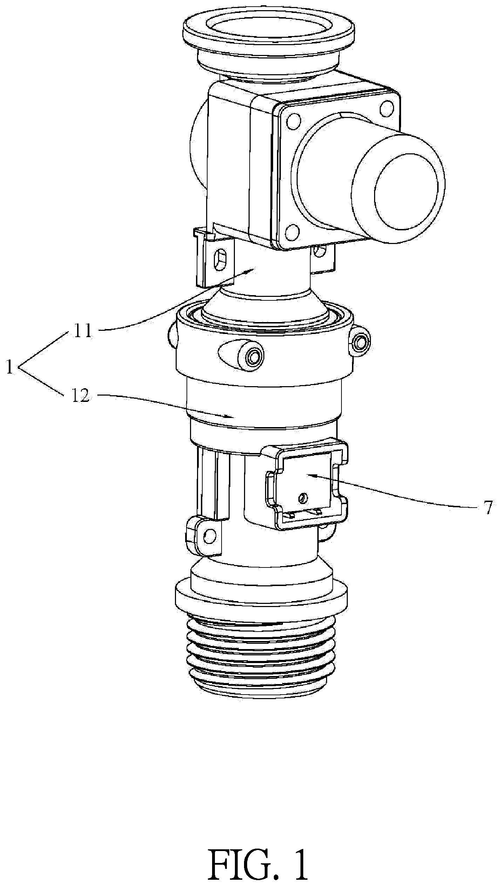

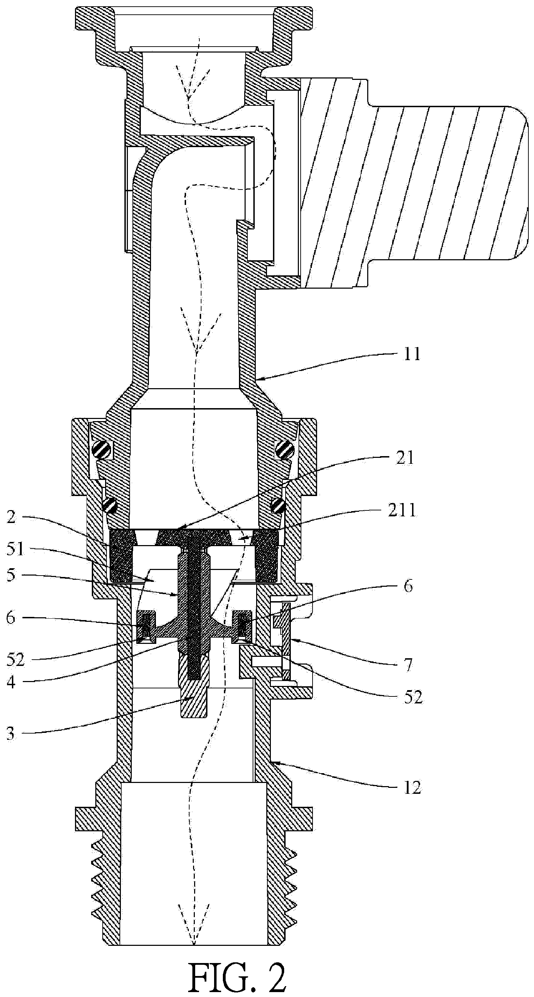

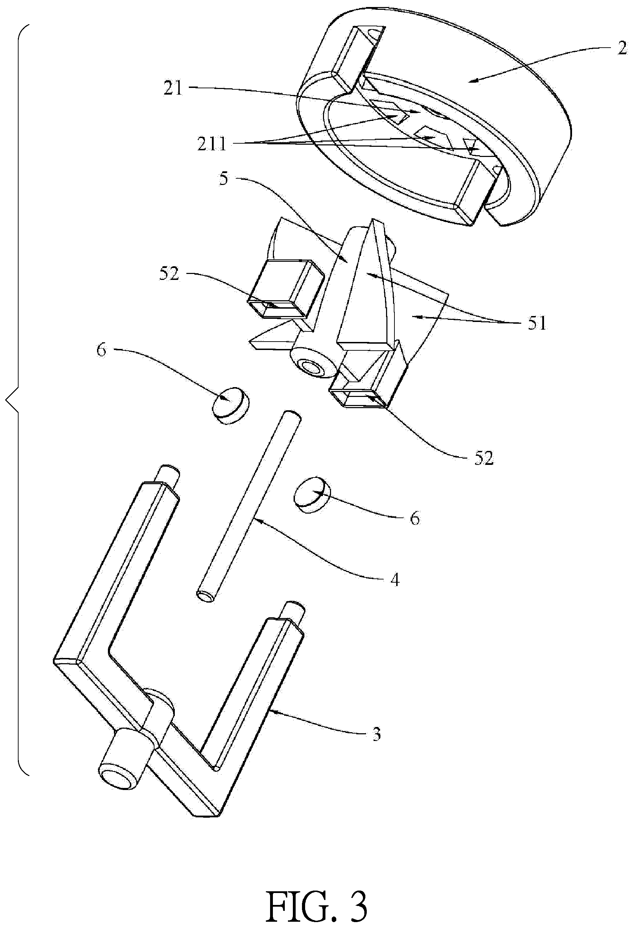

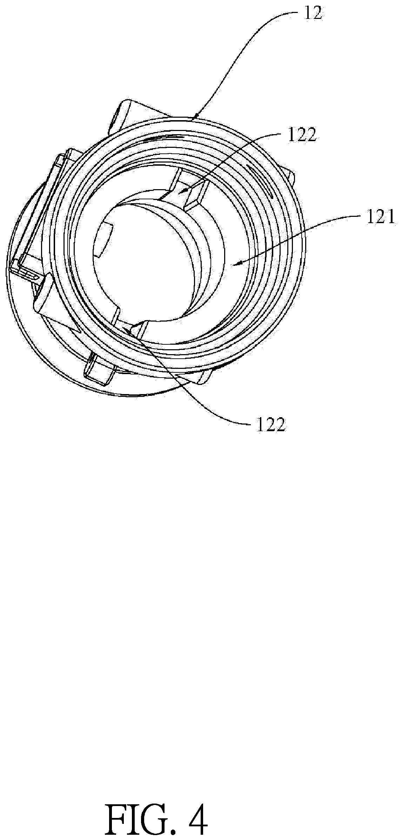

As shown in FIG. 1 through FIG. 4, the present invention discloses a flow sensor. The flow sensor comprises a housing 1 through which water flow passes. A fixing seat 2 and a holder 3 are provided in the housing 1. A central rotating shaft 4 is rotatably connected between the fixing seat 2 and the holder 3, that is, the fixing seat 2 and the holder 3 form a frame for installing the central rotating shaft 4. The upper and lower ends of the central rotating shaft 4 are rotatably inserted into the fixing seat 2 and the holder 3, respectively. The central rotating shaft 4 can rotate between the fixing seat 2 and the holder 3 freely.

An impeller 5 is secured and mounted on the central rotating shaft 4. The impeller 5 includes a plurality of streamlined blades 51. The blades 51 are driven by the water flow to rotate around the central rotating shaft 4 in response to the flow rate through the precise rotational speed.

Notably, at least one of the blades 51 on the impeller 5 has a magnet mounting groove 52 that is integrally formed with the outer side of the blade 51. (Preferably, two symmetrical blades 51 on the impeller 5 have magnet mounting grooves 52 that are integrally formed with the outer sides of the respective blades 51.) The magnet mounting grooves 52 are integrally formed with the impeller 5 and the respective blades 51 through an integral injection molding process. This integrated design ensures the synchronous rotation of the magnets 6 and the blades 51, thereby improving the accuracy of flow measurement, simplifies the assembly process and improves the overall structural strength.

In this design, the magnet 6 is made of magnet material and detachably connected in the magnet mounting groove 52. The detachable design of the magnet 6 facilitates disassembly, assembly, maintenance and replacement and is beneficial to reduce production and assembly costs.

Correspondingly, a Hall sensor 7 is mounted on the outer wall of the housing 1 for detecting changes in the magnetic field of the magnet 6. The Hall sensor 7 is positioned corresponding to the magnet 6, which can accurately capture changes in the magnetic field generated by the magnet 6.

In the present invention, the rotation of the magnet 6 is strictly synchronized with the rotation of the impeller 5 due to the integrated design of the magnet 6 with the blade 51 and the magnet mounting groove 52. This greatly enhances the sensitivity and accuracy of the flow sensor when detecting flow. In addition, the integrated design eliminates errors caused by gaps and looseness of the components in conventional designs, ensuring the reliability of the flow sensor and the accuracy of the measurement data.

More specifically, the magnet 6 is in interference fit with the corresponding magnet mounting groove 52. Such a design realizes a firm connection between the magnet 6 and the magnet mounting groove 52 and ensures that the magnet will not be displaced during rotation of the impeller, thus avoiding problems that may lead to a reduction in measurement accuracy.

It is noteworthy that the magnet mounting groove 52 is disposed on the outer side of the blade 51 so that the radius of movement of the magnet 6 in the magnet mounting groove 52 is relatively large, which is advantageous for increasing the sensitivity of the sensor. More specifically, since the radius of movement of the magnet 6 is larger, it generates relatively greater centrifugal force when the impeller 5 rotates. In this way, changes in the magnetic field generated by the magnet 6 at each fixed angle of rotation can be detected by the Hall sensor 7 at a longer distance, thereby favorably improving the sensitivity and measurement accuracy of the sensor.

Physically, the increase in the radius of movement means that the linear speed of magnet 6 is higher at the same rotational speed. Since the Hall sensor 7 detects changes in the magnetic field, the rapid movement of the magnet 6 increases the frequency and intensity of changes in the magnetic field, allowing the Hall sensor 7 to respond to changes in the flow rate more sensitively. In practice, even very small flow changes can be detected in time by the sensor and converted into electrical signals accurately, thereby providing very fine flow control and monitoring capabilities.

In addition, the design of the magnet 6 located on the outer side of the blade is beneficial to reduce the structural complexity and torsional strength of the center of the impeller. Because the magnet 6 is not placed at or near the central rotating shaft 4, the stress burden on the central rotating shaft during high-speed rotation is reduced. This design not only improves the response speed and accuracy of the sensor but also improves the durability and reliability of the entire device.

In order to further improve the overall performance and measurement accuracy of the flow sensor, preferably, the blades of the impeller have a plurality of (two or more) magnet mounting grooves 52. (Two magnet mounting grooves are shown in the figures.) The magnet mounting grooves are evenly distributed in the corresponding blades 51 around the axis of the impeller 5. This evenly distributed design has several significant advantages:
1. Balance: Uniform distribution of multiple magnets 6 can maintain the balance of the impeller 5, especially in high-speed rotation, reducing vibration and noise effectively. A well-balanced impeller reduces mechanical wear and extends the service life of the equipment.
2. Sensitivity: Since the magnets are evenly distributed in different blades, it can be guaranteed that there are magnets in the detection range of the sensor at any time during the rotation of the impeller, which further improves the sensitivity of the system to detect changes in the flow rate, especially in the case of small changes in the flow rate, it can still be captured accurately.
3. Accuracy: The magnets that are evenly distributed can be in response to the rotational speed of the impeller more accurately because deviations from any one magnet will be balanced by the readings from the other magnets. This design improves the accuracy of the sensor over the entire operating range, especially in flow detection with a wide dynamic range.
4. Uniform magnetic field distribution: The uniform distribution of multiple magnets generates a uniform magnetic field within the moving area of the impeller. This makes the readings of the Hall-effect sensor more stable and consistent, as it reduces fluctuations in magnetic field intensity along the rotational path of the impeller.

This design that the multiple magnets are evenly distributed improves the performance of the device greatly and ensures continuous and accurate flow measurement under various working conditions for a wider range of applications.

More specifically, both the fixing seat 2 and the holder 3 are detachably mounted in the housing 1 so that they can be assembled inside the housing 1 with ease. The holder 3 and the fixing seat 2 can be easily connected to or disconnected from each other. This design increases the modularity and ease of maintenance of the device while simplifying the assembly and disassembly process.

The housing 1 consists of two main parts: an upper housing 11 and a lower housing 12. In this design, a positioning step 121 is disposed inside the lower housing 12. The positioning step 121 is configured to support the fixing seat 2. During assembly, the fixing seat 2 can be inserted into the lower housing 12 from above and positioned on the positioning step 121. This design ensures that the fixing seat is positioned securely and simplifies the assembly process.

Then, the lower end of the upper housing 11 is inserted into the opening of the upper end of the lower housing 12. The upper housing 11 and the lower housing 12 are tightly connected through a U-shaped pin and a sealing ring to fix the entire structure. The bottom of the upper housing 11 presses down against the fixing seat 2 to ensure the stability and vibration resistance of the fixing seat 2 during operation and to avoid degradation of instrument accuracy or damage to parts due to vibration.

To further optimize the mounting of the holder 3, the inner wall of the lower housing 12 has positing grooves 122. The holder 3 can be directly inserted into the positioning grooves to ensure precise positioning and firm connection of the holder. This insertion and positioning method not only simplifies the assembly process of the device but also provides a stable support structure to maintain the correct positional relationship of the mechanical components inside the device.

This design allows the entire device to be disassembled quickly without using special tools when maintenance, cleaning, or replacement parts are needed, reducing the time and cost of maintenance and repair greatly. Besides, the modular design facilitates potential upgrades and customized modifications, providing good flexibility and scalability to meet the specific needs of different users. These designs take into account the convenience of actual operation and the maintenance cost to the user, while balancing the long-term operational stability and economic benefits of the equipment.

More specifically, a baffle plate 21 is disposed on the fixing seat 2. The baffle plate not only serves as a structural part but also plays a crucial role in fluid dynamics. The baffle plate 21 has a plurality of water distribution holes 211. These holes are evenly distributed in the baffle plate and correspond in position to the respective blades 51 under the baffle plate 21.

This design has the following advantages.
1. Uniform distribution of fluid: The baffle plate 21 has the water distribution holes 211 that are evenly distributed, such that the fluid is distributed more uniformly before flowing into the impeller. This is beneficial to reduce the uneven loading on the impeller, which in turn reduces vibration and noise and improves the efficiency and service life of the whole device.
2. Enhancement of dynamic performance: The water distribution holes 211 are arranged corresponding to the positions of the respective blades 51, which means that the fluid can act on the impeller more directly and effectively. This direct action reduces the loss of kinetic energy in the fluid, thus improving the rotational efficiency and overall dynamic performance.
3. Reducing energy consumption: By aligning the fluid directly with the blades, the additional energy loss due to the change in fluid direction can be reduced. This precise adjustment of flow direction enables the entire system to operate more energy-efficiently and reduce operational costs.
4. Improvement of precision: For applications that require high-precision flow control, the design that the water distribution holes 211 are evenly distributed and precisely aligned with the blades ensures stable and controllable flow, especially important in precision equipment such as flow sensors.
5. Simplified structural design: The design of the baffle plate 21 combines multiple functions in one, reducing the need for additional components to realize the same function, thus simplifying the overall structure and reducing manufacturing costs and maintenance difficulties.

## Claims

1. A flow sensor, **characterized in that**: the flow sensor comprises a housing (1) through which water flow passes, a fixing seat (2) and a holder (3) are provided in the housing (1), a central rotating shaft (4) is rotatably connected between the fixing seat (2) and the holder (3), an impeller (5) is secured and mounted on the central rotating shaft (4), the impeller (5) includes a plurality of blades (51), at least one of the blades (51) has a magnet mounting groove (52) that is integrally formed with an outer side of the blade (51), a magnet (6) is detachably connected in the magnet mounting groove (52), and a Hall sensor (7) is mounted on an outer wall of the housing (1) and corresponds in position to the magnet (6).

2. The flow sensor of claim 1, wherein the magnet (6) is in interference fit with the corresponding magnet mounting groove (52).

3. The flow sensor of claim 1, wherein the magnet mounting groove (52) is plural, and the magnet mounting grooves (52) are evenly distributed in the corresponding blades (51) around an axis of the impeller (5).

4. The flow sensor of claim 1, wherein the fixing seat (2) and the holder (3) are detachably mounted in the housing (1), and the holder (3) and the fixing seat (2) are detachably connected to each other.

5. The flow sensor of claim 4, wherein the housing (1) consists of an upper housing (11) and a lower housing (12), a positioning step (121) is disposed inside the lower housing (12), the fixing seat (2) is inserted into the lower housing (12) in a top-down direction to abut against the positioning step (121), the upper housing (11) is detachably connected to the lower housing (12), and a lower end of the upper housing (11) presses down against the fixing seat (2).

6. The flow sensor of claim 5, wherein the lower end of the upper housing (11) is inserted into an opening of an upper end of the lower housing (12), and the upper housing (11) and the lower housing (12) are tightly connected to each other.

7. The flow sensor of claim 5, wherein an inner wall of the lower housing (12) has positing grooves (122) for insertion and positioning of the holder (3).

8. The flow sensor of claim 1, wherein a baffle plate (21) is provided on the fixing seat (2), and the baffle plate (21) has a plurality of water distribution holes (211) that are evenly distributed and correspond in position to the respective blades (51).
